# EUROPEAN PATENT APPLICATION

(11) **EP 4 262 006 A1**
(43) Date of publication of application: **18.10.2023**
(21) Application number: 22880029.8
(22) Date of filing: 31.08.2022
(51) Int. Cl.: H01M 50/411, H01M 4/13, H01M 10/052, H01M 50/40

(54) **PHASE-CHANGE MICROCAPSULE, SEPARATOR, ELECTRODE PLATE, BATTERY, AND ELECTRICAL DEVICE**

(30) Priority: 12.10.2021 CN 202111189223
(71) Applicant: Contemporary Amperex Technology Co., Limited, Ningde City, Fujian 352100 (CN)
(72) Inventor: HAN, Fengsheng, Ningde City, Fujian 352100 (CN); NIU, Shaojun, Ningde City, Fujian 352100 (CN)
(74) Representative: Behr, Wolfgang
(86) International application number: PCT/CN2022/116271
(87) International publication number: WO 2023/061083

(57) **Abstract**

This application relates to the field of batteries, and discloses a phase-change microcapsule, a separator, an electrode plate, a battery, and an electrical device. The phase-change microcapsule includes: a core and an insulative heat-conducting wall material wrapped around the core. The core includes a first phase-change component and a second phase-change component. The first phase-change component is paraffin with a melting point of 37 °C to 42 °C. The second phase-change component is paraffin with a melting point of 65 °C to 75 °C. A melting point of the insulative heat-conducting wall material is greater than 75 °C. A mass ratio between the first phase-change component and the second phase-change component is 35: (45 to 77). The phase-change microcapsule is applied to the battery in the form of a coating layer, so that a bent tab is connected to the separator by the coating layer in a close fitting manner. The specified first phase-change component and second phase-change component of a specified melting point are mixed at a specified ratio in the core, and coordinate with each other to avoid scalding the separator and avoid an internal short circuit of the battery when a tab is laser-welded to a current collection assembly.

## Description

### CROSS-REFERENCE TO RELATED APPLICATIONS

This application claims priority to Chinese Patent Application No. 202111189223.3, filed on October 12, 2021 and entitled "PHASE-CHANGE MICROCAPSULE, SEPARATOR, ELECTRODE PLATE, BATTERY, AND ELECTRICAL DEVICE", which is incorporated herein by reference in its entirety.

### Technical Field

This application relates to the field of batteries, and in particular, to a phase-change microcapsule, a separator, an electrode plate, a battery, and an electrical device.

### BACKGROUND

In a process of manufacturing a battery, a current collection assembly is configured to electrically connect a tab of a battery cell and an electrode terminal, so that electrical energy is transferred from an electrode assembly to the electrode terminal and then transferred out of the battery cell through the electrode terminal. A plurality of battery cells are electrically connected to each other by a busbar component, so as to implement series, parallel, or series-and-parallel connection of the battery cells.

However, in practical applications, it is found that a short circuit is prone to occur inside the battery after the current collection assembly is laser-welded.

### SUMMARY

This application provides a phase-change microcapsule, a separator, an electrode plate, a battery, and an electrical device, and can avoid the technical problem that a short circuit is prone to occur in the battery.

Some embodiments of this application are implemented in the following way:
According to a first aspect, this application exemplarily provides a phase-change microcapsule, including: a core and an insulative heat-conducting wall material wrapped around the core.

The core includes a first phase-change component and a second phase-change component. The first phase-change component is paraffin with a melting point of 37 °C to 42 °C. The second phase-change component is paraffin with a melting point of 65 °C to 75 °C. A melting point of the insulative heat-conducting wall material is greater than 75 °C.

A mass ratio between the first phase-change component and the second phase-change component is 35: (45 to 77).

The technical solutions of this application bring at least the following beneficial effects:
In this application, a phase-change microcapsule of a core-shell structure is provided, and is applied to a battery, such as a lithium battery, in the form of a coating layer. In this way, a negative tab of the lithium battery is connected to the separator by the coating layer in a close fitting manner. The first phase-change component and second phase-change component of a specified melting point are mixed at a specified ratio in the core, and coordinate with each other. In this way, when the tab is welded to a current collection assembly, the first phase-change component changes phase and quickly absorbs heat to cushion a heating rate of the separator and prevent an instantaneous temperature of the separator from exceeding a minimum scald-causing temperature before the second phase-change component changes the phase. In this way, on the premise of keeping the instantaneous temperature of the separator below the minimum scald-causing temperature, the second phase-change component is caused to change the phase to continuously absorb a large amount of heat, and prevent a high temperature from scalding the separator at a later stage of laser welding. In addition, the melting point of the insulative heat-conducting wall material is greater than 75 °C, thereby letting the phase-changed core flow out of the insulative heat-conducting wall material without damaging the insulative heat-conducting wall material.

In other words, the first phase-change component and the second phase-change component coordinate with each other to absorb the welding heat and melt in a stepped manner, thereby controlling the heating rate of the separator and the temperature of the separator, ensuring that a real-time temperature of the separator is always lower than the minimum scald-causing temperature during welding, and in turn, avoiding an internal short circuit of the battery caused by the scalded separator.

In some exemplary embodiments, a structural formula of the paraffin used as the first phase-change component is: CₙH₂ₙ₊₂, where 18 ≤ n ≤ 21; and a structural formula of the paraffin used as the second phase-change component is: C_{n'}H_{2n'+2}, where 25 ≤ n' ≤ 28.

The beneficial effects of the above technical solution include: the paraffin of the specified structural formula meets the melting point requirement satisfactorily, and possesses the advantage of abundant sources.

In some exemplary embodiments, the insulative heat-conducting wall material includes a substrate and ceramic particles dispersed in the substrate. The substrate is a polymer.

The beneficial effects of the above technical solution include: The ceramic particles introduced in the wall material make the wall material more resistant to high temperatures, facilitate the core to absorb in time the heat generated during welding of the current collection assembly, and in addition, avoid excessive shrinkage of a contact part between the separator and the negative electrode plate during the welding.

Optionally, the polymer includes phenolic resin.

In some exemplary embodiments, in the phase-change microcapsule, a mass ratio between the wall material and the core is 1: (3 to 4).

The beneficial effects of the above technical solution include: The mixing ratio between the wall material and the core is controlled to fall within a reasonable range; the thickness of the wall material can be controlled under the condition that the particle diameter of the phase-change microcapsule meets the use requirements, and the thickness of the wall material is ensured to be reasonable; and the phase-change microcapsule in use is ensured to be stable, and can serve a function of protecting the separator against an instantaneous high temperature during the welding.

In some exemplary embodiments, in the phase-change microcapsule, a mass ratio between the substrate and the ceramic particles is 3: (4 to 5), and a mass ratio between the substrate and the core is 1: (2 to 3).

The beneficial effects of the above technical solution include: The content of the substrate, the ceramic particles, and the core is controlled to fall within the above range to ensure stability of the phase-change microcapsule, so that the phase-change microcapsule can serve a function of protecting the separator against an instantaneous high temperature during the welding.

In some exemplary embodiments, the ceramic particles include a silicon dioxide particle.

The beneficial effects of the above technical solution include: The silicon dioxide particles are excellent in high-temperature resistance, insulation, and thermal conductivity, improve the performance of the wall material in high-temperature resistance, insulation, and thermal conductivity, improve the stability and heat absorption capacity of the phase-change microcapsule during welding of the current collection assembly, and possess advantages such as abundant sources and high availability.

In some exemplary embodiments, a particle diameter of the silicon dioxide particle is 60 to 90 nm.

The beneficial effects of the above technical solution include: The above silicon dioxide particle of a specified particle diameter can be conveniently added as a dopant and uniformly dispersed in the substrate.

In some exemplary embodiments, a particle diameter of the phase-change microcapsule is 0.5 to 4 µm.

The beneficial effects of the above technical solution include: The phase-change microcapsule with an appropriate particle diameter facilitates formation of a coating layer, and effectively avoids scalding the edge of the separator on the negative electrode side during welding of the current collection assembly.

According to a second aspect, this application exemplarily provides a separator. An edge of the separator is coated with a coating layer. The coating layer contains the phase-change microcapsule according to the first aspect of this application.

The beneficial effects of the above technical solution include: When the separator is applied to a battery, the coating layer on the edge of the separator corresponds to a tab with a heat transfer coefficient greater than or equal to 380 W/m·k. In this case, the coating layer absorbs the heat transferred by the tab during welding of the current collection assembly, ensures that a real-time temperature of the separator is always lower than the minimum scald-causing temperature during the welding, and in turn, avoids an internal short circuit of the battery caused by the scalded separator. In addition, the coating layer, mainly located on the edge of the separator, basically does not affect the performance of the separator itself.

In some exemplary embodiments, a thickness of the coating layer is 10 to 35 µm, optionally 10 to 20 µm, and optionally 25 to 35 µm.

The beneficial effects of the above technical solution include: The thickness of the coating layer is reasonable. When the separator is applied to the battery, in a case that the tab is laser-welded to the current collection assembly, not only the separator is prevented from being scalded, but also the size of the edge of the separator is prevented from being much affected.

According to a third aspect, this application exemplarily provides an electrode plate. The electrode plate includes a current collector and a tab connected to each other. A heat transfer coefficient of the tab is greater than or equal to 380 W/m·k. At least one side of the tab is coated with a coating layer. The coating layer contains the phase-change microcapsule according to the first aspect of this application.

The beneficial effects of the above technical solution include:
The heat transfer coefficient of the tab is greater than or equal to 380 W/m·k. Therefore, the tab is applied to a battery, and the coating layer containing the phase-change microcapsule is disposed between the tab and the separator to avoid direct contact between the separator and the tab. During welding of the current collection assembly, the coating layer can absorb the heat transferred by the tab, so that the real-time temperature of the separator is always lower than the minimum scald-causing temperature, thereby avoiding an internal short circuit caused by the scalded separator.

In some exemplary embodiments, a thickness of the coating layer is 10 to 35 µm, optionally 10 to 20 µm, and optionally 25 to 35 µm.

The beneficial effects of the above technical solution include: The thickness of the coating layer is reasonable. During welding of the current collection assembly, not only the separator coordinating with the tab is prevented from being scalded, but also the size of the edge of the separator coordinating with the tab is prevented from being much affected.

According to a fourth aspect, this application exemplarily provides a battery. The battery includes a separator and an electrode plate. The electrode plate includes a current collector and a tab connected to each other.

A coating layer is applied between the tab and the separator, and the coating layer is formed on the tab and/or formed on the separator.

The coating layer contains the phase-change microcapsule according to the first aspect of this application.

The beneficial effects of the above technical solution include: The coating layer containing the phase-change microcapsule is applied between the tab and the separator, so that the coating layer absorbs the heat transferred by the tab during welding of the current collection assembly, ensures that a real-time temperature of the separator is always lower than the minimum scald-causing temperature during the welding, and in turn, avoids an internal short circuit of the battery caused by the scalded separator.

In some exemplary embodiments, a thickness of the coating layer between the separator and the tab is 20 to 35 µm.

The beneficial effects of the above technical solution include: The thickness of the coating layer is reasonable. During welding of the current collection assembly, not only the edge of the separator coordinating with the tab is prevented from being scalded, but also the size of the edge of the separator is prevented from being much affected.

According to a fifth aspect, this application provides an electrical device, equipped with the battery according to the fourth aspect of this application.

### BRIEF DESCRIPTION OF DRAWINGS

To describe technical solutions in embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.
FIG. 1 is a schematic structural diagram of a vehicle according to some embodiments of this application;
FIG. 2 is a schematic structural exploded view of a battery according to some embodiments of this application;
FIG. 3 is a schematic structural exploded view of a battery cell according to some embodiments of this application;
FIG. 4 is a schematic structural diagram of an unwound electrode assembly according to some embodiments of this application;
FIG. 5 is a schematic structural diagram of a flattened negative electrode region according to some embodiments of this application;
FIG. 6 is a scanning electron microscope image of a phase-change microcapsule according to Embodiment 1;
FIG. 7 is an image of an edge region of an unwound separator that has been welded according to Embodiments 2 to 7; and
FIG. 8 is an image of an edge region of an unwound separator that has been welded according to Embodiment 1 and Comparative Embodiments 1 to 5.

The drawings are not drawn to scale.

### List of reference numerals:

1000-vehicle;
100-battery; 200-controller; 300-motor;
10-box; 11-first part; 12-second part;
20-battery cell; 21-end cap; 21a-electrode terminal; 22-insulator; 23-current collection assembly; 24-housing; 25-electrode assembly;
251-positive current collector; 252-positive tab; 253-negative current collector; 255-negative tab; 256-separator; 257- edge region of separator; 258-tab region; 259-coating layer.

### DETAILED DESCRIPTION OF EMBODIMENTS

The following describes the implementation solutions of this application in detail with reference to embodiments. A person skilled in the art understands that the following embodiments are merely intended to illustrate this application, but not intended to limit the scope of this application. Unless conditions are otherwise specified in the embodiments, conventional conditions or conditions recommended by the manufacturer apply. A reagent or instrument used herein without specifying the manufacturer is a conventional product that is commercially available from the market.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in this application are intended as non-exclusive inclusion.

In the description of the embodiments of this application, the technical terms "first" and "second" are merely intended to distinguish between different items but not intended to indicate or imply relative importance or implicitly specify the number of the indicated technical features, specific order, or order of precedence.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of the embodiments of this application, the term "a plurality of" means two or more (inclusive of two).

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the increase of the application fields of the power batteries.

The applicant thereof has noticed that, after a current collection assembly is welded by laser welding, a short circuit is prone to occur inside a battery. Taking a lithium-ion battery as an example, after studies, the applicant finds that a negative tab of the lithium-ion battery is generally a thin copper foil of relatively high thermal conductivity, but an instantaneous temperature of the laser welding of the current collection assembly is very high. Consequently, the edge of the separator at which the separator is in contact with the negative tab is scalded, for example, generates pores or shrinks excessively, resulting in an internal short circuit of the battery.

Based on the above findings, the applicant tries applying a coating layer onto the edge at which the negative tab fits closely with the separator of the lithium battery, so as to isolate the negative tab from the separator and avoid direct contact in between. In addition, the applicant applies a phase-change material in the coating layer to absorb the heat transferred to the tab during laser welding, so as to reduce the temperature of the separator. Theoretically, the heat absorption performed by using the phase change of the phase-change material to reduce the temperature of the separator can solve the above technical problem. However, in an actual operation process, the applicant finds that a phase-change response speed varies between different phase-change materials. A light emission time in the laser welding is generally 0.1 second, and an instantaneous temperature of the laser beam emitted is up to 1000 °C. Consequently, although the final temperature of the separator is lower than the minimum scald-causing temperature, the phase-change material is unable to respond quickly to the phase change during phase transition, and the instantaneous temperature of the separator is greater than the minimum scald-causing temperature. The separator is still prone to be scalded.

In view of the facts above, the applicant provides a phase-change microcapsule, puts the phase-change microcapsule on the edge of the separator and/or at least one side of the tab, fits the parts together to form a battery cell, and applies the battery cell to a battery. The tab with a heat transfer coefficient greater than or equal to 380 W/m·k is connected to a current collection assembly by laser welding. During the laser welding, a first phase-change component and a second phase-change component of different melting points are mixed at a specified ratio in the phase-change microcapsule, and coordinate with each other to implement stepped melting of the first phase-change component and the second phase-change component. In this way, a heating rate of the separator and a real-time temperature of the separator are controlled, thereby effectively avoiding the problem of an internal short circuit of the battery cell caused by the scald of the separator during the laser welding of the current collection assembly.

The battery disclosed in some embodiments of this application is applicable to, but not limited to, electrical devices such as a vehicle, watercraft, or aircraft. A power supply system of the electrical device may be formed by using the battery disclosed in this application and the like, so as to avoid an internal short circuit of the battery and improve the performance stability and longevity of the battery.

An embodiment of this application provides an electrical device powered by a battery. The electrical device may be, but without being limited to, a mobile phone, a tablet, a notebook computer, an electric toy, an electric tool, an electric power cart, an electric vehicle, a ship, a spacecraft, and the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

For ease of description in the following embodiments, a vehicle 1000 is used as an example of the electrical device according to an embodiment of this application.

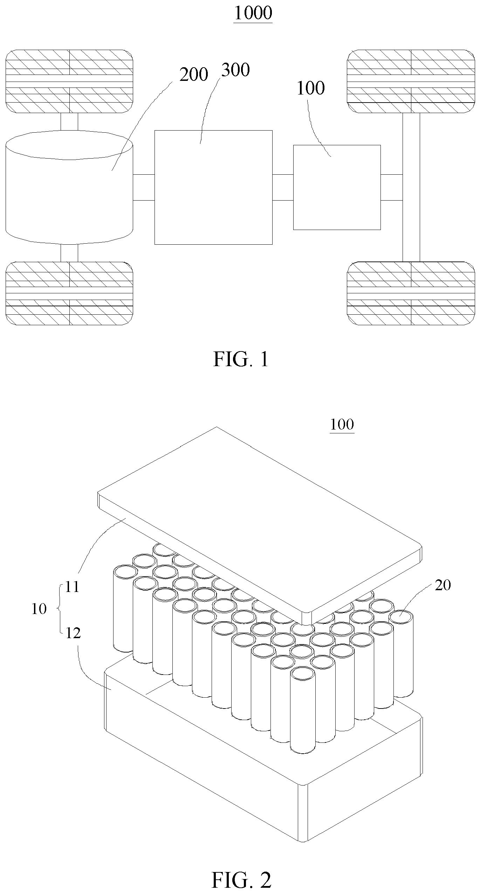

Referring to FIG. 1, FIG. 1 is a schematic structural diagram of a vehicle 1000 according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a drive power supply of the vehicle 1000 to provide driving power for the vehicle 1000 in place of or partly in place of oil or natural gas.

Referring to FIG. 2, FIG. 2 is an exploded view of a battery 100 according to some embodiments of this application. The battery 100 includes a box 10 and a battery cell 20. The battery cell 20 is accommodated in the box 10. The box 10 is configured to provide an accommodation space for the battery cell 20. The box 10 may be in various structures. In some embodiments, the box 10 may include a first part 11 and a second part 12. The first part 11 and the second part 12 fit and cover each other. The first part 11 and the second part 12 together define an accommodation space configured to accommodate the battery cell 20. The second part 12 may be a hollow structure opened at one end. The first part 11 may be a plate-like structure. The first part 11 fits on an opening side of the second part 12 so that the first part 11 and the second part 12 together define the accommodation space. Alternatively, both the first part 11 and the second part 12 may be hollow structures opened at one side. The opening side of the first part 11 fits the opening side of the second part 12. Definitely, the box 10 formed by the first part 11 and the second part 12 may be in various shapes, such as a cylinder or a cuboid.

The battery 100 may contain a plurality of battery cells 20. The plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the box 10. Alternatively, the plurality of battery cells 20 may be connected in series, parallel, or series-and-parallel pattern to form a battery 100 in the form of battery modules first. A plurality of battery modules are then connected in series, parallel, or series-and-parallel pattern to form a whole for being accommodated in the box 10. The battery 100 may further include other structures. For example, the battery 100 may further include a busbar component. The busbar component is configured to implement electrical connection between the plurality of battery cells 20.

Each battery cell 20 may be, but without being limited to, a secondary battery or primary battery; or may be a lithium-sulfur battery, a sodium-ion battery, or a magnesium-ion battery. The battery cell 20 may be in the shape of a cylinder, flat body, cuboid, or the like.

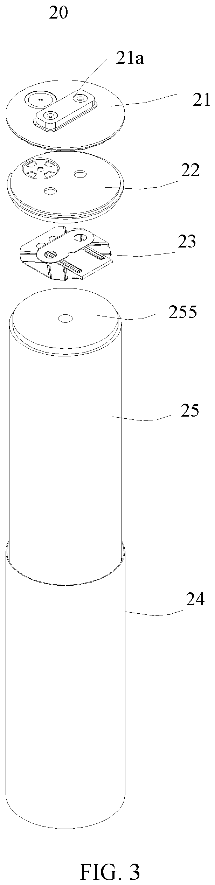

Referring to FIG. 3, FIG. 3 is a schematic structural exploded view of a battery cell 20 according to some embodiments of this application. The battery cell 20 is a minimum unit for making up a battery. As shown in FIG. 3, the battery cell 20 includes an end cap 21, an insulator 22, a current collection assembly 23, a housing 24, an electrode assembly 25, an electrolytic solution (not shown in the drawing), and other functional components.

The end cap 21 is a component that fits and covers the opening of the housing 24 to isolate the internal environment of the battery cell 20 from the external environment. Without limitation, the shape of the end cap 21 may be adapted to the shape of the housing 24 to fit the housing 24. Optionally, the end cap 21 may be made of a material of appropriate hardness and strength (such as aluminum alloy), so that the end cap 21 is not prone to deform when squeezed or impacted. In this way, the battery cell 20 achieves higher structural strength and higher safety performance. In some embodiments, a pressure relief mechanism configured to release an internal pressure when the internal pressure or temperature of the battery cell 20 reaches a threshold may be further disposed on the end cap 21. The end cap 21 may also be made of a variety of materials such as copper, iron, aluminum, stainless steel, aluminum alloy, or plastic, without being particularly limited herein.

Functional components such as electrode terminals 21a are disposed on the end cap 21. The electrode terminals 21a may be configured to be electrically connected to the electrode assembly 25 to output or input electrical energy of the battery cell 20. In some embodiments, a pressure relief mechanism configured to release an internal pressure when the internal pressure or temperature of the battery cell 20 reaches a threshold may be further disposed on the end cap 21. The end cap 21 may also be made of a variety of materials such as copper, iron, aluminum, stainless steel, aluminum alloy, or plastic, without being particularly limited herein.

The insulator 22 is located on an inner side of the end cap 21. The insulator 22 may be configured to isolate an electrically connected component in the housing 24 from the end cap 21 to reduce short-circuit risks. For example, the insulator 22 may be plastic, rubber, or the like.

The current collection assembly 23 is located on a side of the insulator 22, the side being away from the end cap 21. The current collection assembly 23 is configured to electrically connect the electrode terminal 21a and the electrode assembly 25, so as to transmit electrical energy from the electrode assembly 25 to the electrode terminals 21a. Through the electrode terminals 21a, the electrical energy is transmitted out of the electrode assembly 25.

The housing 24 is a component configured to fit the end cap 21 to form an internal environment of the battery cell 20. The formed internal environment may be used to accommodate the electrode assembly 25, an electrolytic solution, and other components. The housing 24 and the end cap 21 may be stand-alone components. An opening may be made on the housing 24. At the opening, the end cap 21 fits with the opening to form the internal environment of the battery cell 20. Without limitation, the end cap 21 and the housing 24 may be integrated instead. Specifically, the end cap 21 and the housing 24 may form a common connection interface before other components are put into the housing. Subsequently, when the interior of the housing 24 needs to be sealed, the end cap 21 is made to fit with the housing 24. The housing 24 may be in various shapes and sizes, such as a cuboid, cylinder, or hexagonal prism. Specifically, the shape of the housing 24 may be determined depending on the specific shape and size of the electrode assembly 25. The housing 24 may be made of a variety of materials such as copper, iron, aluminum, stainless steel, aluminum alloy, or plastic, without being particularly limited herein.

The electrode assembly 25 is a component that reacts electrochemically in the battery cell 20. The housing 24 may contain one or more electrode assemblies 25.

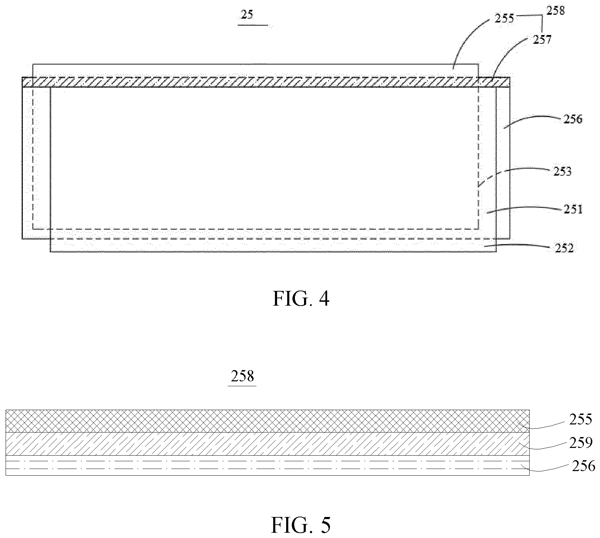

Referring to FIG. 4 and FIG. 5, the electrode assembly 25 is typically formed of a positive electrode plate and a negative electrode plate that are wound or stacked together. Generally, a separator 256 is disposed between the positive electrode plate and the negative electrode plate. The positive electrode plate includes a positive current collector 251 coated with a positive active material on a surface. The negative electrode plate includes a negative current collector 253 coated with a negative active material on a surface. The positive current collector 251 coated with the positive active material and the negative current collector 253 coated with the negative active material jointly constitute a body portion of the electrode assembly 25. A positive tab 252 and a negative tab 255 are electrically connected to the corresponding positive current collector 251 and negative current collector 253 respectively, and are not coated with the active material on the surface.

The positive tab 252 and the negative tab 255 may be located at one end of the body portion together or at two ends of the body portion respectively. In a charge-and-discharge process of the battery 100, the positive active material and the negative active material react with an electrolytic solution. The tabs 23a are connected to electrode terminals 21a to form a current circuit.

Taking a lithium-ion battery as an example of the battery cell 20, optionally, the heat transfer coefficient of the negative tab 255 is greater than or equal to 380 W/m·k.

FIG. 4 is obtained by unwinding the electrode assembly 25. FIG. 4 is a schematic structural view of the unwound electrode assembly 25. The separator 256 includes an edge region 257. In practical applications, when the separator 256 is applied to a jelly-roll type battery, the edge of the separator 256 is a long-side edge of the separator 256, the long-side edge being close to the negative tab 255 with a heat transfer coefficient greater than or equal to 380 W/m·k. When the separator 256 is applied to a stacked-type battery, the edge is an edge of the separator 256 that is close to the negative tab 255 with a heat transfer coefficient greater than or equal to 380 W/m·k.

According to FIG. 4, the negative electrode plate includes a tab region 258. Before the tab region 258 is bent, an edge of the separator 256, which is oriented toward and protrudes beyond the negative current collector 253 and is used to fit closely with the negative tab 255, serves as the edge region 257 of the separator. The edge region 257 of the separator is coated with a coating layer 259 that contains a phase-change microcapsule.

The separator 256 protrudes beyond the tab by a length not greater than 4 mm. Therefore, the width of the edge region 257 of the separator is greater than or equal to 4 mm, and is less than or equal to 8 mm. An end of the separator 256, which protrudes beyond the negative tab 255, is a first end; and the other end opposite to the first end serves as a second end. The width of the edge region is obtained by extending the separator 256 from the first end to the second end. The width here means a distance by which the separator 256 extends from the first end in the extension direction.

The schematic structural diagram of a flattened negative electrode region shown in FIG. 5 is obtained by bending the edge region 257 of the separator and the negative tab 255 concurrently. According to FIG. 5, the tab region 258 includes the edge region 257 of the separator, the coating layer 259, and the negative tab 255. The coating layer 259 of the tab region 258 is located directly under the negative tab 255, and the negative tab 255 fits closely with the edge region 257 of the separator through the coating layer 259.

The thickness of the coating layer 259 may be 25 to 35 µm, and specifically, may be 30 µm, for example.

In this case, the negative tab 255 of the flattened negative electrode region is laser-welded to the current collection assembly 23. A laser beam is cast downward from the top of the current collection assembly 23 to weld the current collection assembly 23 and the negative tab 255 together. During the welding, the heat is transferred from the current collection assembly 23 to the negative tab 255, and then the heat is transferred by the negative tab 255 to the coating layer 259 and absorbed by the coating layer 259, thereby protecting the edge region 257 of the separator located in the tab region 258.

According to some embodiments of this application, this application provides a phase-change microcapsule, including: a core and an insulative heat-conducting wall material wrapped around the core. The core includes a first phase-change component and a second phase-change component. The first phase-change component is paraffin with a melting point of 37 °C to 42 °C. The second phase-change component is paraffin with a melting point of 65 °C to 75 °C. A melting point of the insulative heat-conducting wall material is greater than 75 °C. A mass ratio between the first phase-change component and the second phase-change component is 35: (45 to 77).

The core means a material enclosed as a content in the insulative heat-conducting wall material.

The phase-change microcapsule according to this application is of a core-shell structure. When the phase-change microcapsule is applied to a battery, the wall material is insulative under the working conditions of the battery, that is, possesses a good resistivity, for example, a resistivity of 1013 Ω·cm to 1014 Ω·cm, so that the phase-change microcapsule coating layer is highly insulative as a whole. The wall material possesses a good heat transfer coefficient, for example, a heat transfer coefficient of 0.22 W/m K or higher than 0.22 W/m K, or the like, so that the phase-change microcapsule is highly effective in absorbing heat and can absorb in time the heat generated during the welding of the current collection assembly, thereby achieving the purpose of preventing the separator from being scalded. In addition, the wall material is inert under the working state of the battery, and does not react with the electrolytic solution. In addition, the melting point of the wall material is greater than 75 °C. Therefore, with the heat transfer coefficient of the tab being greater than or equal to 380 W/m·k, in a process of connecting the tab to the current collection assembly by laser welding, the phase-changed molten core flows out of the insulative heat-conducting wall material without damaging the insulative heat-conducting wall material.

The core includes a first phase-change component and a second phase-change component. Both the first phase-change component and the second phase-change component are paraffin, and therefore, can be well mixed conveniently. The first phase-change component is paraffin with a melting point of 37 °C to 42 °C. The second phase-change component is paraffin with a melting point of 65 °C to 75 °C. The first phase-change component and the second phase-change component not only achieve good thermal phase transition performance, but also achieve a relatively high endothermic value during the phase transition. In addition, the highest melting point of the first phase-change component is significantly lower than the lowest melting point of the second phase-change component. In this way, during laser welding of the current collection assembly, the first phase-change component at a relatively low temperature responds to the phase change quickly first, and absorbs enough heat to change the phase into a liquid state, so as to cushion the heating rate of the separator and control the real-time temperature of the separator. Subsequently, the second phase-change component absorbs a large amount of heat to change the phase into a liquid state, so as to further reduce the heating rate of the separator and control the real-time temperature of the separator. In other words, when the temperature is higher than the melting points of the first phase-change component and the second phase-change component, the first phase-change component and the second phase-change component transform from a solid state to a liquid state. The first phase-change component and the second phase-change component are distributed uniformly, and therefore, can be melted in a stepped manner when the temperatures of the two components increase as a whole. In this way, the real-time temperature of the separator is controlled to be always lower than the minimum scald-causing temperature of the separator. Meanwhile, the core as a whole is sealed in the chemically inert wall material.

The mass ratio between the first phase-change component and the second phase-change component affects the heating rate and temperature of the separator during welding of the current collection assembly. An appropriate mass ratio between the first phase-change component and the second phase-change component ensures a high overall capacity of heat absorption of the core while avoiding an excessive heating rate of the separator, thereby effectively reducing the temperature of the separator. If the mass percent of the first paraffin component is excessive, the overall capacity of heat absorption of the core will be insufficient, and in turn, the real-time temperature of the separator is higher than the minimum scald-causing temperature of the separator. If the mass percent of the first paraffin component is insufficient, the phase-change response time left for the second phase-change component is short. Consequently, before the second phase-change component makes a phase-change response, the separator is heated up rapidly, and the real-time temperature of the separator is higher than the minimum scald-causing temperature under the impact of the rapid temperature rise, making the separator prone to be scalded.

Optionally, the mass ratio between the first phase-change component and the second phase-change component is 35: 45, 35: 47, 35: 50, 35: 55, 35: 60, 35: 65, 35: 70, 35: 75, 35: 77, or a ratio value falling within a range formed by any two thereof.

It is hereby noted that there are several kinds of paraffin with a melting point of 37 °C to 42 °C. The first phase-change component may be one type of paraffin with a melting point of 37 °C to 42 °C, or may be a mixture of at least two types of paraffin with a melting point of 37 °C to 42 °C mixed at any ratio. Likewise, the composition of the second phase-change component is obtained, without being limited herein.

According to some embodiments of this application, optionally, a structural formula of the paraffin used as the first phase-change component is: CₙH₂ₙ₊₂, where 18 ≤ n ≤ 21; and a structural formula of the paraffin used as the second phase-change component is: C_{n'}H_{2n'+2}, where 25 ≤ n' ≤ 28.

According to some embodiments of this application, optionally, in the phase-change microcapsule, a mass ratio between the wall material and the core is 1: (3 to 4). For example, the mass ratio between the wall material and the core is 1: 3, 1: 3.3, 1: 3.5, 1: 3.7, 1: 3.9, 1:4, or a ratio value falling within a range formed by any two thereof.

Under the condition that the particle diameter of the phase-change microcapsule is constant, the mass ratio falling within the above range can limit the thickness of the wall material and improve the stability of the phase-change microcapsule.

According to some embodiments of this application, optionally, the insulative heat-conducting wall material includes a substrate and ceramic particles dispersed in the substrate. The substrate is a polymer.

The ceramic particles are particles made of ceramic materials that is resistant to high temperatures and thermally conductive. The material of the ceramic particles includes but not limited to at least one of boron nitride, silicon nitride, silicon carbide, silicon dioxide, or the like.

The polymer is well compatible with paraffin and is insulative.

According to some embodiments of this application, optionally, the polymer includes phenolic resin. That is, the polymer includes but is not limited to phenolic resin, and instead, may be any one of polyacrylonitrile resin, melamine formaldehyde resin, or a phenolic resin polymer.

With the above settings, the wall material is highly insulative, and the ceramic particles introduced in the wall material make the wall material more resistant to high temperatures, facilitate the core to absorb in time the heat generated during welding of the current collection assembly, and in addition, avoid excessive shrinkage of a contact part between the separator and the negative electrode plate during the welding. By using the polymer as a substrate, it is ensured that the wall material is well compatible with the paraffin, and can form a stable interface between the wall material and the paraffin, thereby improving the thermal stability of the phase-change microcapsule.

Optionally, the polymer is phenolic resin.

The substrate made of the above material is more compatible with the paraffin, facilitates uniform dispersion of the ceramic particles, and ensures stability of the phase-change microcapsule.

According to some embodiments of this application, optionally, in the phase-change microcapsule, a mass ratio between the substrate and the ceramic particles is 3: (4 to 5), and a mass ratio between the substrate and the core is 1: (2 to 3). For example, in phase-change microcapsule, the mass ratio between the substrate and the ceramic particles is any one of 3: 4, 3: 4.3, 3: 4.5, 3: 4.6, 3: 4.9, 3:5, or a ratio value falling within a range formed by any two thereof. In addition, the mass ratio between the substrate and the core is 1: 2, 1: 2.3, 1: 2.5, 1: 2.7, 1: 2.9, 1:3, or a ratio value falling within a range formed by any two thereof.

The content of the substrate, the ceramic particles, and the core is controlled to fall within the above range to ensure stability of the phase-change microcapsule, so that the phase-change microcapsule can serve a function of protecting the separator against an instantaneous high temperature during the welding.

According to some embodiments of this application, optionally, the ceramic particles are silicon dioxide particles. Being excellent in high-temperature resistance, insulation, and thermal conductivity, the silicon dioxide particles improve the performance of the wall material in high-temperature resistance, insulation, and thermal conductivity, improve the stability and heat absorption capacity of the phase-change microcapsule during welding of the current collection assembly, and possess advantages such as abundant sources and high availability.

Optionally, a particle diameter of the silicon dioxide particle is 60 to 90 nm. The particle diameter mentioned here means an average particle diameter of the silicon dioxide particles. For example, the particle diameter of the silicon dioxide particles is any one of 60 nm, 65 nm, 70 nm, 75 nm, 80 nm, 83 nm, 85 nm, or 90 nm, or a value falling within a range formed by any two thereof. The above silicon dioxide particle of a specified particle diameter can be conveniently added as a dopant and uniformly dispersed in the substrate.

According to some embodiments of this application, optionally, the particle diameter of the phase-change microcapsule is 0.5 to 4 µm. The particle diameter mentioned here means an average particle diameter of the phase-change microcapsules. The phase-change microcapsule of this size facilitates formation of a coating layer between the tab and the edge of the separator, and, when the tab is laser-welded to the current collection assembly, effectively avoids scalding the edge of the separator that coordinates with the tab.

The phase-change microcapsule may be obtained by wrapping the wall material around the core by in-situ polymerization.

The in-situ polymerization process is: Dispersing a mixture of one or more phase-change materials in water under the action of an emulsifier to form an oil-in-water emulsion, adding dropwise one or more water-soluble monomers or a low-molecular-weight prepolymer water solution of resin into the emulsion at a time or stepwise, and adjusting the stirring speed, reaction temperature, pH, and the like of the system to actuate a polycondensation reaction so that micromolecules (such as water molecules) are further removed between the prepolymer molecules to generate a non-water-soluble polycondensate at an interface of the emulsion, where the polycondensate is of a cross-linked three-dimensional mesh structure, thereby forming a phase-change microcapsule in which a phase-change material is encapsulated.

In some exemplary embodiments, a method for preparing a phase-change microcapsule includes:
dispersing ceramic particles in water to form a water phase;
mixing the first phase-change component and the second phase-change component, and heating the mixture until a molten state to form an oil phase; and
mixing the water phase and the oil phase, stirring the mixture to form a Pickering emulsion, adding a low-molecular-weight prepolymer water solution of resin into the Pickering emulsion, and stirring and polymerizing at a normal temperature for at least 4 hours.

In some other exemplary embodiments, a method for preparing a phase-change microcapsule includes:
dispersing ceramic particles in water to form a water phase;
mixing a first phase-change component, a second phase-change component, monomers for synthesizing a polymer, a cross-linker, and an initiator, and heating the mixture until a molten state to form an oil phase; and
mixing the water phase and the oil phase, stirring the mixture to form a Pickering emulsion, and stirring and polymerizing the emulsion at 60 °C to 80 °C.

With the polymer formed on the surface of the core by in-situ polymerization, it is ensured that the wall material is wrapped around the core to form a core-shell structure, and it is easy to obtain the first phase-change component and the second phase-change component that are uniformly mixed and wrapped in the wall material. In addition, the phase-change microcapsule can be mass-produced by a controllable method.

It is hereby noted that, after the polymer is formed on the surface of the core by in-situ polymerization, the phase-change microcapsules that are not put into use currently may be dried to form powder. The power is easy to store and transport. Steps of putting the powder into use include: mixing the powder with a binder to form a slurry at a practically required mixing ratio. Steps of putting the phase-change microcapsules into use include: adding a binder directly into the polymerized phase-change microcapsule emulsion without a drying process after the polymer is formed on the surface of the core by in-situ polymerization, and stirring the mixture to form a slurry ready for use.

The binder is configured to fix the phase-change microcapsule onto the separator or tab. The binder includes, but is not limited to, aqueous styrene-butadiene rubber (SBR) binder, and sodium carboxymethyl cellulose (CMC). For example, the binder is a discrete SBR binder or a mixture of CMC and SBR mixed at a mass ratio of 3: (6 to 8).

According to some embodiments of this application, this application provides a separator. An edge of the separator is coated with a coating layer. The coating layer contains a phase-change microcapsule.

In practical applications, when the separator is applied to a jelly-roll type battery, for example, the edge of the separator is a long-side edge of the separator, the long-side edge being close to the tab with a heat transfer coefficient greater than or equal to 380 W/m·k. When the separator is applied to a stacked-type battery, the edge is an edge of the separator that is close to the tab with a heat transfer coefficient greater than or equal to 380 W/m·k.

The coating layer includes a substrate and phase-change microcapsules dispersed in the substrate. The substrate means a material which, attached to the surface of the separator, the phase-change microcapsules can be dispersed in and a film can be formed on. For example, the substrate is a binder. The binder may be, for example, an SBR binder and/or CMC. The SBR binder is of high thermal stability. Both the SBR binder and the CMC are highly compatible with the phase-change capsule. The separator is made of a material including but not limited to polypropylene (polypropylene, PP), polyethylene (polyethylene, PE), or the like. The specific material may be selected according to actual needs, and is not limited herein.

In practical applications, when the tab with a heat transfer coefficient greater than or equal to 380 W/m·k is an all-tab, the coating layer completely covers the edge of the separator, where the term "all-tab" means a tab being the edge of the current collector. When the tab with a heat transfer coefficient greater than or equal to 380 W/m·k is a tab of a single-tab electrode plate or a multi-tab electrode plate, the coating layer may completely cover the edge of the separator. In this way, after the tab is bent, the separator is completely isolated from the tab by using the coating layer, or the coating layer is disposed on a part corresponding to the tab on the edge, and the separator can also be completely isolated from the tab by using the coating layer. The term "single-tab" means that only one tab protrudes from each electrode plate to conduct a current. The term "multi-tab" means that at least two tabs protrude out of each electrode plate to conduct a current.

According to some embodiments of this application, optionally, a thickness of the coating layer is 10 to 35 µm, optionally 10 to 20 µm, and optionally 25 to 35 µm.

During assembling of a battery, when both the separator and the tab are coated with a coating layer, the thickness of the coating layer formed on the separator is 10 to 20 µm; when only the separator is coated but the tab is not coated, the thickness of the coating layer formed on the separator is 25 to 35 µm, for example, is any one of 25 µm, 27 µm, 28 µm, 30 µm, or 35 µm, or a value falling within a range formed by any two thereof. The thickness of the coating layer falling within a reasonable range ensures that the temperature and the heating rate of the separator can be effectively adjusted, without much affecting the size of the edge of the separator.

Optionally, the coating layer may be prepared in the following manner: Mixing the phase-change microcapsules provided in the first aspect and a binder at a mass ratio such as 1: (7 to 9) to form a coating slurry, applying the slurry onto the edge of the separator, and drying the slurry to form the coating layer; or, adding a binder directly into the polymerized phase-change microcapsule emulsion, for example, adding CMC dry powder first, and then adding an SBR emulsion after the CMC is thoroughly dissolved, where the mass ratio between the CMC and the SBR is 3: 7, so as to form a coating slurry, and then applying the slurry onto the edge of the separator, and drying the slurry at 70 °C to 80 °C to form the coating layer.

According to some embodiments of this application, optionally, this application provides an electrode plate. The electrode plate includes a current collector and a tab connected to each other. A heat transfer coefficient of the tab is greater than or equal to 380 W/m·k. At least one side of the tab is coated with a coating layer. The coating layer contains the phase-change microcapsule according to the first aspect of this application.

The coating layer includes a substrate and phase-change microcapsules dispersed in the substrate. The substrate means a material which, attached to the surface of the separator, the phase-change microcapsules can be dispersed in and a film can be formed on. For example, the substrate is a binder. For example, the binder may be an SBR binder. The binder is of high thermal stability, and is highly compatible with the phase-change capsule.

After the electrode plate is fitted into the battery, in order to further avoid the contact between the electrode plate and the separator, the coating layer may extend from the tab to the current collector.

After the electrode plate is fitted into the battery, the separator protrudes beyond the tab by a length that is generally not more than 4 mm. Therefore, optionally, the width of the coating layer on the tab is greater than or equal to 1 mm and less than or equal to 4 mm, and the width of the coating layer on the current collector is greater than or equal to 0 and less than or equal to 4 mm. That is, the total width of the coating layer is greater than or equal to 4 mm and less than or equal to 8 mm. The width of the coating layer here is a distance from an end of the coating layer close to the current collector to an end away from the current collector.

The heat transfer coefficient of the tab is greater than or equal to 380 W/m·k. That is, the tab is a metal of high thermal conductivity. The tab is made of a material such as copper, silver, or silver-plated copper.

Optionally, the tab is made of copper.

The tab and the current collector may be welded together or formed in one piece.

The electrode plate may be a single-tab electrode plate, a multi-tab electrode plate, or an all-tab electrode plate, without being limited herein.

According to some embodiments of this application, optionally, a thickness of the coating layer is 10 to 35 µm, optionally 10 to 20 µm, and optionally 25 to 35 µm.

During assembling of a battery, when both the separator and the tab are coated with a coating layer, the thickness of the coating layer formed on the tab is 10 to 20 µm; when only the tab is coated but the separator is not coated, the thickness of the coating layer formed on the tab is 25 to 35 µm, for example, is any one of 25 µm, 27 µm, 28 µm, 30 µm, or 35 µm, or a value falling within a range formed by any two thereof. The thickness of the coating layer falling within a reasonable range ensures that the temperature and the heating rate of the separator can be effectively adjusted, without much affecting the size of the edge of the separator that coordinates with the tab.

Optionally, the coating layer may be prepared in the following manner: Mixing the phase-change microcapsules provided in the first aspect and a binder at a mass ratio such as 1: (7 to 9) to form a coating slurry, applying the slurry onto the tab, and drying the slurry to form the coating layer; or, adding a binder directly into the polymerized phase-change microcapsule emulsion, for example, adding CMC dry powder first, and then adding an SBR emulsion after the CMC is thoroughly dissolved, where the mass ratio between the CMC and the SBR is 3: 7, so as to form a coating slurry, and then applying the slurry onto the tab, and drying the slurry at 70 °C to 80 °C to form the coating layer.

According to some embodiments of this application, optionally, this application provides a battery. The battery includes a separator and an electrode plate. The electrode plate includes a current collector and a tab connected to each other. A heat transfer coefficient of the tab is greater than or equal to 380 W/m k. A coating layer is applied between the tab and the separator. The coating layer is formed on the tab and/or formed on the separator. The coating layer contains the phase-change microcapsule according to the first aspect of this application.

The edge of the separator is isolated from the tab by use of the coating layer to avoid direct contact between the separator and the tab. Therefore, during welding of the current collection assembly, the coating layer absorbs the heat transferred by the tab, reduces the heat transferred to the separator, and controls the heating rate of the separator, thereby ensuring that the real-time temperature of the separator is always lower than the minimum scald-causing temperature during the welding, and in turn, avoiding an internal short circuit caused by the scalded separator.

Optionally, the thickness of the coating layer between the separator and the electrode plate is 20 to 35 µm. For example, the thickness of the coating layer is any one of 20 µm, 25 µm, 28 µm, 30 µm, 32 µm, or 35 µm, or a value falling within a range formed by any two thereof. The thickness of the coating layer falling within a reasonable range ensures that the temperature and the heating rate of the separator can be effectively adjusted, without much affecting the size of the edge of the separator.

In some embodiments, the coating layer is formed on just a single side of the tab and located between the tab and the separator. In this case, the thickness of the coating layer is 20 to 35 µm.

In some embodiments, the coating layer is formed on just the edge of the separator and located between the tab and the separator. In this case, the thickness of the coating layer is 20 to 35 µm.

In some embodiments, a first coating layer is formed on the tab, a second coating layer is formed on the edge of the separator, and the first coating layer fits closely with the second coating layer. The thickness of the first coating layer is 10 to 20 µm, the thickness of the second coating layer is 10 to 20 µm, and a total thickness of the first coating layer and the second coating layer is 20 to 35 µm.

According to some embodiments of this application, optionally, this application exemplarily provides an electrical device, equipped with the battery disclosed in any one of the foregoing technical solutions.

The electrical device may be any device or system powered by the battery.

The following describes in more detail the phase-change microcapsule, the separator, the electrode plate, the battery, and the electrical device according to this application with reference to some embodiments.

### Embodiments 1 to 6

A phase-change microcapsule is provided, and is made by a method including:
dispersing silicon dioxide particles shown in Table 1 in 100 grams of water to serve as a water phase;
mixing the first phase-change component and the second phase-change component shown in Table 1, and heating the mixture until 75 °C to form a molten oil phase;
mixing the oil phase and the water phase, and stirring for 10 minutes at a high speed not less than 5000 r/min to obtain a Pickering emulsion; and
adding an emulsifier and phenolic resin into the Pickering emulsion, and then polymerizing at 25 °C for 5 hours to obtain a phase-change microcapsule emulsion. The dosage of the emulsifier in Table 1 is a mass percent of the corresponding Pickering emulsion.

**Table 1 Ingredients and mixing ratio**

| | First phase-change component | | Second phase-change component | | Phenolic resin | Silicon dioxide | | Emulsifier | |
|---|---|---|---|---|---|---|---|---|---|
| | Melting point (°C) | Dosage (g) | Melting point (°C) | Dosage (g) | Dosage (g) | Particle diameter (nm) | Dosage (g) | Ingredients | Dosage (%) |
| Embodiment 1 | 40°C | 35 | 70°C | 45 | 9 | 70 | 11 | SDS | 4% |
| Embodiment 2 | 40°C | 35 | 70°C | 50 | 9 | 70 | 12 | SDS | 4% |
| Embodiment 3 | 40°C | 35 | 70°C | 77 | 12 | 70 | 16 | SDS | 4% |
| Embodiment 4 | 37°C | 40 | 70°C | 60 | 11 | 70 | 14 | SDS | 4% |
| Embodiment 5 | 42°C | 40 | 65°C | 60 | 11 | 70 | 14 | SDS | 4% |
| Embodiment 6 | 40°C | 40 | 75°C | 60 | 11 | 70 | 14 | SDS | 4% |
| Embodiment 7 | 37 °C139 °C | 40 | 65 °C/70 °C | 60 | 11 | 70 | 14 | SDS | 4% |

In Embodiment 7, when the melting point of the first phase-change material is 37 °C/39 °C, the first phase-change material is obtained by mixing the paraffin of a melting point 37 °C and the paraffin of a melting point 39 °C at a mass ratio of 1: 1; when the melting point of the first phase-change material is 65 °C/70 °C, the first phase-change material is obtained by mixing the paraffin of a melting point 65 °C and the paraffin of a melting point 70 °C at a mass ratio of 1: 1.

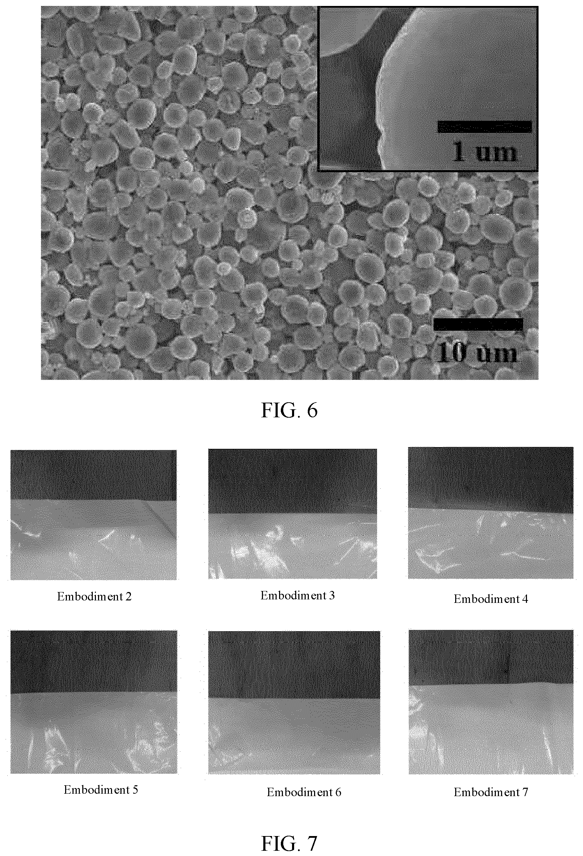

The phase-change microcapsule emulsion of Embodiment 1 is dried to obtain a product shown in FIG. 6. FIG. 6 is a scanning electron microscope image of a phase-change microcapsule according to Embodiment 1. As can be seen from FIG. 6, the particle diameter of the phase-change microcapsule is 0.5 to 4 µm.

### Comparative Embodiments 1 to 5

Comparative Embodiment 1 differs from Embodiment 1 only in: The core is the paraffin with a melting point of 40 °C instead of the core used in Embodiment 1.
Comparative Embodiment 2 differs from Embodiment 1 only in: The core is just the paraffin with a melting point of 70 °C instead of the core used in Embodiment 1.
Comparative Embodiment 3 differs from Embodiment 1 only in: The core is just the paraffin with a melting point of 52 °C instead of the core used in Embodiment 1.
Comparative Embodiment 4 differs from Embodiment 1 only in: The mass ratio between the first phase-change component and the second phase-change component is 35: 80.
Comparative Embodiment 5 differs from Embodiment 1 only in: The mass ratio between the first phase-change component and the second phase-change component is 50: 45.

### Test Example 1

The CMC dry powder shown in Table 2 is added into the phase-change microcapsule emulsions prepared in Embodiments 1 to 7 and Comparative Embodiments 1 to 5. Subsequently, the CMC dry powder dissolves, the SBR emulsion shown in Table 2 is added to form a slurry. The slurry is applied onto the edges of the separators of the same dimensions (the separator are 9310 mm in length, 128.5 mm in width, and made of a PP material, and the edge of the separator is 8 mm in width). The slurry is dried so that a 20 µm-thick coating layer containing the phase-change microcapsule exists between the edge of the separator and the copper foil (serving as a tab, the heat transfer coefficient of copper foil being 400 W/ (m-K)). The tab is flattened, and then a side of the copper foil away from the separator is fastened to the current collection plate. The laser beams of the same parameters are cast downward from the top of current collection plates of the same specifications and materials. The current collection plate is welded to the copper foil by laser welding (the light emission time is 0.1 s, and the instantaneous temperature of the laser beam is 1000 °C). After completion of the welding, the separator is unwound, and the change of a side of the separator is observed, the side being away from the coating layer.

In Comparative Embodiments 1 to 5 and Embodiment 1, the dosages of the SBR emulsion and the CMC dry powder are the same.

**Table 2 Dosages of CMC dry powder and SBR emulsion**

| | CMC dry powder | SBR emulsion |
|---|---|---|
| | Dosage (g) | Dosage (g) |
| Embodiment 1 | 9.6 | 22 |
| Embodiment 2 | 10.2 | 23 |
| Embodiment 3 | 13.44 | 31 |
| Embodiment 4 | 12 | 28 |
| Embodiment 5 | 12 | 28 |
| Embodiment 6 | 12 | 28 |
| Embodiment 7 | 12 | 28 |

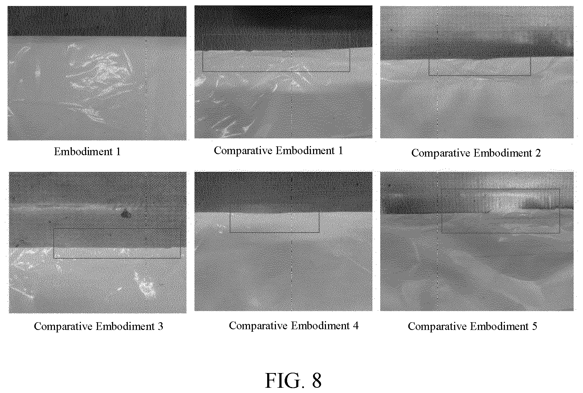

The test results are shown in FIG. 7 and FIG. 8. The tab needs to be flattened and then unwound during the test. Therefore, creases inevitably occur on the surface of the separator.

As can be clearly seen from FIG. 7 and FIG. 8, the edge of the separator in Embodiments 1 to 7 is flat and neat without scalds. The boxed part in FIG. 8 is a scalded part on the edge of the separator. The edge region of the separator in Comparative Embodiments 1 to 5 exhibits scald-induced shrinkage and notches and other defects to varying degrees in contrast to Embodiment 1.

Clearly, the phase-change microcapsule according to this application is applicable to the battery in the form of a coating layer, so that a bent tab is connected to the separator by the coating layer in a close fitting manner. The specified first phase-change component and second phase-change component of a specified melting point are mixed at a specified ratio in the core, and coordinate with each other to avoid scalding the separator and avoid an internal short circuit of the battery when a tab is laser-welded to a current collection assembly.

What is described above is merely specific embodiments of this application, but is not intended to limit this application. To a person skilled in the art, various modifications and variations may be made to this application. Any modifications, equivalent replacements, improvements, and the like made without departing from the spirit and principles of this application still fall within the protection scope of this application.

## Claims

1. A phase-change microcapsule, comprising: a core and an insulative heat-conducting wall material wrapped around the core, wherein
the core comprises a first phase-change component and a second phase-change component, the first phase-change component is paraffin with a melting point of 37 °C to 42 °C, the second phase-change component is paraffin with a melting point of 65 °C to 75 °C, and a melting point of the insulative heat-conducting wall material is greater than 75 °C; and
a mass ratio between the first phase-change component and the second phase-change component is 35: (45 to 77).

2. The phase-change microcapsule according to claim 1, wherein a structural formula of the paraffin used as the first phase-change component is: CₙH₂ₙ₊₂, wherein 18 ≤ n ≤ 21; and
a structural formula of the paraffin used as the second phase-change component is: C_{n'}H_{2n'+2}, wherein 25 ≤ n' ≤ 28.

3. The phase-change microcapsule according to claim 1 or 2, wherein, in the phase-change microcapsule, a mass ratio between the wall material and the core is 1: (3 to 4).

4. The phase-change microcapsule according to any one of claims 1 to 3, wherein the insulative heat-conducting wall material comprises a substrate and ceramic particles dispersed in the substrate, and the substrate is a polymer; and
optionally, the polymer comprises phenolic resin.

5. The phase-change microcapsule according to claim 4, wherein, in the phase-change microcapsule, a mass ratio between the substrate and the ceramic particles is 3: (4 to 5), and a mass ratio between the substrate and the core is 1: (2 to 3).

6. The phase-change microcapsule according to claim 4, wherein, the ceramic particles comprise a silicon dioxide particle; and
optionally, a particle diameter of the silicon dioxide particle is 60 to 90 nm.

7. The phase-change microcapsule according to any one of claims 1 to 3, wherein a particle diameter of the phase-change microcapsule is 0.5 to 4 µm.

8. A separator, wherein an edge of the separator is coated with a coating layer, and the coating layer contains the phase-change microcapsule according to any one of claims 1 to 7.

9. The separator according to claim 8, wherein a thickness of the coating layer is 10 to 35 µm, optionally 10 to 20 µm, and optionally 25 to 35 µm.

10. An electrode plate, wherein the electrode plate comprises a current collector and a tab connected to each other, a heat transfer coefficient of the tab is greater than or equal to 380 W/m·k, at least one side of the tab is coated with a coating layer, and the coating layer contains the phase-change microcapsule according to any one of claims 1 to 7.

11. The electrode plate according to claim 10, wherein a thickness of the coating layer is 10 to 35 µm, optionally 10 to 20 µm, and optionally 25 to 35 µm.

12. A battery, comprising a separator and an electrode plate, wherein the electrode plate comprises a current collector and a tab connected to each other;
a coating layer is applied between the tab and the separator, and the coating layer is formed on the tab and/or formed on the separator; and
the coating layer contains the phase-change microcapsule according to any one of claims 1 to 7.

13. The battery according to claim 12, wherein a thickness of the coating layer between the separator and the tab is 20 to 35 µm.

14. An electrical device, equipped with the battery according to any one of claims 12 to 13.
